(19) Europäisches Patentamt
European Patent Office
Office européen des brevets

(11) **EP 1 630 518 A2**

(12) **EUROPÄISCHE PATENTANMELDUNG**

(43) Veröffentlichungstag:
01.03.2006 Patentblatt 2006/09

(51) Int Cl.:
*G01B 7/12* (2006.01)

(21) Anmeldenummer: 05018223.7

(22) Anmeldetag: **23.08.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **24.08.2004 DE 102004041803**

(71) Anmelder: **Frauscher, Josef, Ing.**
**4774 St. Marienkirchen (AT)**

(72) Erfinder:
• **Frauscher, Josef**
**4774 St. Marienkirchen (AT)**
• **Talke, Wolfgang**
**13629 Berlin (DE)**

(74) Vertreter: **Helms, Joachim**
**Patentanwalt**
**Dantestrasse 27**
**80637 München (DE)**

(54) **Verfahren zur Ermittlung des Raddruchmessers bewegter Eisenbahnfahrzeuge**

(57) Die Erfindung betrifft ein Verfahren zur Ermittlung eines Raddurchmessers, insbesondere von Güterwagen, wobei eine Rad-sensoreinheit an der Fahrschiene angeordnet ist, die zwei beabstandete Radsensoren aufweist, welche jeweils ein Sensorsignal (1) erzeugen, deren zeitliche Verläufe (1a,1b) sich in einem gemeinsamen Schnittpunkt (3) schneiden. Um mit geringem Aufwand eine hohe Genauigkeit zu erzielen, wird vorgeschlagen, dass die Differenz der Signalwerte am Schnittpunkt (3) und an zumindest einem Scheitelpunkt (2a, b) ermittelt wird, dass der doppelte Sensorabstand in einem gedachten Raddurchmesserkreis (6) gleich der Länge der Kreissehne (se) und die Differenz der Signalwerte multipliziert mit einem vorgegebenen konstanten Umrechnungsfaktor (C) gleich der Sehnenhöhe (hs) und damit dem maximalen Abstand der Sehne im Raddurchmesserkreis gesetzt wird, wobei der halbe Raddurchmesser (R), die halbe Kreissehne (se/2) und die Differenz aus dem halben Raddurchmesser (R) und der Sehnenhöhe (hs) im Raddurchmesserkreis (6) die Seitenlängen eines rechtwinkligen Dreiecks bilden, und dass der Raddurchmesser (R) als Hypotenuse des Dreiecks anhand der beiden anderen Seitenlängen berechnet wird.

**Beschreibung**

Die Erfindung betrifft ein Verfahren zur Ermittlung des Rad-durchmessers von sich längs einer Fahrschiene bewegenden Rä-dern, insbesondere von Güterwagen, gemäß dem Oberbegriff des Anspruchs 1.

Aus der DE 37 21 127 C2 ist bereits ein Radsensor bekannt, der für die Ermittlung des Raddurchmessers von Rädern verwen-det wird, welche sich längs einer Fahrschiene bewegen. Der Radsensor ist an der Fahrschiene unterhalb des Rads angeord-net und verfügt über zwei in Fahrschienenlängsrichtung beabstandete Einzelradsensoren. Diese reagieren auf die mag-netischen Eigenschaften der Eisenräder, wobei sie bei einem darüber rollenden Rad ein Sensorsignal abgeben, welches zu-nächst stetig ansteigt, um dann wieder abzufallen. Entspre-chend dem Abstand der Einzelradsensoren weisen die beiden Sensorsignalkurven einen zeitlichen Versatz auf, wobei der Abstand so gewählt ist, dass sich die beiden Sensorsignalkur-ven immer in einem gemeinsamen Punkt schneiden, zweckmäßiger-weise im mittleren Anstiegsbereich.

Zur Ermittlung des Raddurchmessers werden die Sensorsignal-werte der Scheitelpunkte der beiden Sensorsignalkurven und der gemeinsame Schnittpunkt verwendet. Der Raddurchmesser er-gibt sich, indem die beiden Signalwerte der Scheitelpunkte addiert und durch den Signalwert des Schnittpunkts dividiert werden.

Nachteilig bei dem bekannten Verfahren zur Raddurchmesserbe-stimmung ist dessen Ungenauigkeit. Eine praktische Nutzung ist bei Messfehlern um 50% ausgeschlossen.

Die Aufgabe der Erfindung ist es, ein Verfahren zur Ermitt-lung eines Raddurchmessers anzugeben, das mit geringem Auf-wand eine hohe Genauigkeit erzielt.

Die Aufgabe wird durch die Merkmale des Anspruchs 1 gelöst; die Unteransprüche beschreiben vorteilhafte Ausgestaltungen.

Die Lösung sieht vor, dass die Differenz der Signalwerte am Schnittpunkt und an zumindest einem Scheitelpunkt ermittelt wird, dass der doppelte Sensorabstand in einem gedachten Rad-durchmesserkreis gleich der Länge der Kreis-sehne und die Dif-ferenz der Signalwerte multipliziert mit einem vorgegebenen konstanten Umrechnungsfaktor gleich der Sehnenhöhe und damit dem maximalen Abstand der Sehne im Raddurchmesserkreis ge-setzt wird, wobei der halbe Raddurchmesser, die halbe Kreis-sehne und die Differenz aus dem halben Raddurchmesser und der Sehnenhöhe im Raddurchmesserkreis die Seitenlängen eines rechtwinkligen Dreiecks bilden, und dass der Raddurchmesser als Hypotenuse des Dreiecks anhand der beiden anderen Seiten-längen berechnet wird. Die Scheitelhöhe wird hier als einzige fehlerbehaftete Größe angenommen und der Umrechnungsfaktor durch eine Kalibrierung bestimmt.

Die Genauigkeit lässt sich erhöhen, wenn zur Ermittlung der Differenz der Mittelwert der Signalwerte an den beiden Schei-telpunkten verwendet wird.

Im einfachsten Fall wird der Umrechnungsfaktor anhand zumin-dest eines bekannten Raddurchmessers ermittelt.

Die Erfindung wird nachfolgend anhand einer Zeichnung näher beschrieben.

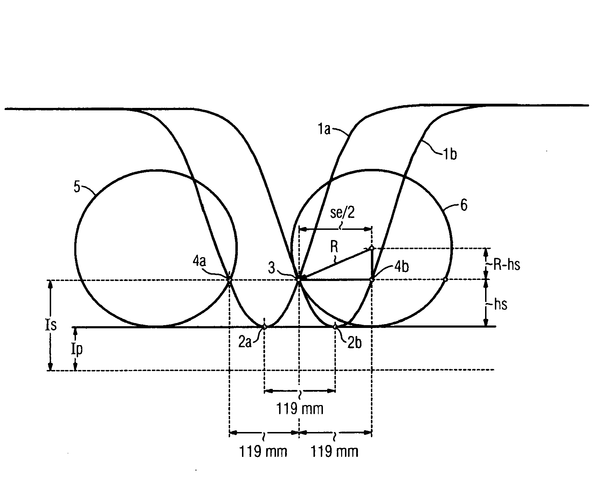

Das Verfahren zur Ermittlung des Raddurchmessers von sich längs einer Fahrschiene bewegenden Rädern von Güterwagen um-fasst einen Radsensoreinheit (nicht gezeigt), die an der Fahrschiene unterhalb der abrollenden Räder angeordnet ist. Die Radsensoreinheit weist zwei Radsensoren auf, die sich in Fahrschienenlängsrichtung in einem Sensorabstand befinden. Zweckmäßigerweise ist der seitliche Abstand jedes Radsensors von der Schiene gleich groß. Die Radsensoren reagieren auf die aus Eisen bestehenden Räder, indem sie bei einem darüber-rollenden Rad ein Sensorsignal 1 in Form eines Ausgangsstroms 1a, 1b erzeugen. Der zeitliche Verlauf der Ausgangsströme 1a, 1b ist in der Zeichnung für den Fall dargestellt, dass sich das Rad auf der Fahrschiene mit konstanter Geschwindigkeit bewegt. Der zeitliche Verlauf der Ausgangsströme 1a, 1b fällt jeweils am Anfang stetig ab und steigt am Ende wieder stetig an. Je nach Ausführung ist es selbstverständlich auch mög-lich, dass die Ausgangsströme 1a, 1b zuerst ansteigen und dann wieder abfallen. Entsprechend weist der Kurvenverlauf der Ausgangsströme 1a, 1b jeweils einen Scheitelpunkt 2a, 2b auf. Der Abstand der Scheitelpunkte 2a, 2b ist gleich dem Ab-stand der Sensoren. Dieser ist im Ausführungsbeispiel 119 mm. Wie die Zeichnung zeigt, ist der Sensorabstand so gewählt, dass sich die beiden Ausgangsstromkurven 1a, 1b für den in Frage kommenden Raddurchmesserbereich im mittleren Anstiegs-bereich in einem gemeinsamen Schnittpunkt 3 schneiden. Legt man durch den Schnittpunkt 3 eine waagerechte Gerade, so er-hält man zwei weitere Schnittpunkte 4a, 4b mit den Ausgangs-stromkurven 1a, 1b. Der Abstand der Schnittpunkte 4a, 4b zum gemeinsamen Schnittpunkt 3 ist wiederum gleich dem Sensorab-stand und damit 119 mm.

Weiter zeigt die Zeichnung zwei gedachte Raddurchmesserkreise 5, 6, wobei in den Raddurchmesserkreis 6 der Radius R des Rads eingezeichnet ist. In dem Raddurchmesserkreis 6 ist der doppelte Sensorabstand, also der doppelte Abstand zwischen den Schnittpunkten 3 und 4a, gleich der Länge der Kreissehne se gesetzt. Die Kreissehne se weist im Raddurchmesserkreis 6 eine Sehnenhöhe hs auf, die dem maximalen Abstand der Sehne se im Raddurchmesserkreis 6 entspricht. Variierende Raddurch-messer bewirken eine entsprechend variierende Sehnenhöhe hs. Bei näherungsweise linearem Zusammenhang ist die Sehnenhöhe hs ein hinreichend genaues Maß um den Raddurchmesser R daraus abzuleiten. Dabei ist die Sehnenhöhe hs nicht direkt bekannt; bekannt ist die Differenz der Signalwerte, d.h. hier der Stromwerte Is, Ip am Schnittpunkt 3 und an den Scheitelpunk-ten 2a, 2b. Die Stromwerte Is, Ip sind in der Zeichnung auf einen Bezugsstrom 0 bezogen eingezeichnet (die unterste Linie in der Zeichnung). Dabei sind bei identischen Sensoren die Stromwerte Is, Ip an den Scheitelpunkten 2a, 2b im Wesentlichen gleich groß. Bei Differenzen sollte man für die Stromwerte Is, Ip an den Scheitelpunkten 2a, 2b den Mittelwert bilden. Die Differenz der Signalwerte Is, Ip ist nicht direkt die Sehnenhöhe hs, sondern sie ist proportional zur Sehnenhöhe hs und lässt sich mit Hilfe eines konstanten Umrechnungsfaktors C berechnen. Wie die Zeichnung zeigt, bilden der Radius R, die Halbkreissehne se/ 2 und die Differenz aus dem Radius und der Sehnenhöhe hs im Raddurchmesserkreis 6 die drei Seitenlängen eines rechtwinkligen Dreiecks, wobei der Raddurchmesser R die Hypothenuse des Dreiecks bildet.

Anhand des Dreiecks erhält man folgende Gleichung:

$$R^2 = (R-hs)^2 + (se/2)^2$$

und daraus unter Berücksichtigung von

$$hs = C*(Is - Ip)$$

$$2R = (se^2/(4*C*(Is - Ip))) + C*(Is - Ip).$$

Der konstante Umrechnungsfaktor C kann anhand eines bekannten Raddurchmessers ermittelt werden.

In dem Raddurchmesserkreis 6 ist der doppelte Sensorabstand, gleich der Länge der Kreissehne se gesetzt. Dies gilt exakt innerhalb des linearen Is-Bereiches, also unter der Voraussetzung, dass die Anstiege der Ausgangsstromkurven 1a, 1b für die zu ermittelnden Raddurchmesser gut durch eine Gerade angenähert werden können.

Mit der Wahl eines bestimmten Sensorabstandes ist ein zugehöriger Raddurchmesserbereich innerhalb des linearen Is-Bereiches definiert.


**Patentansprüche**

**1.**  Verfahren zur Ermittlung des Raddurchmessers von sich längs einer Fahrschiene bewegenden Rädern, insbesondere von Güterwagen, wobei eine das Rad erfassende Radsensoreinheit an der Fahrschiene unterhalb des auf der Fahrschiene abrollenden Rads angeordnet ist, wobei die Radsensoreinheit zwei in Fahrschienenlängsrichtung in einem Sensorabstand zueinander angeordnete Radsensoren aufweist, die jeweils ein Sensorsignal (1) erzeugen, deren zeitlicher Verlauf (1a, 1b) bei einem darüberrollenden Rad jeweils am Anfang stetig ansteigt und am Ende wieder stetig abfällt oder umgekehrt zuerst abfällt und dann wieder ansteigt, und wobei der Sensorabstand so gewählt ist, dass die beiden jeweils einen Scheitelpunkt (2a, 2b) aufweisenden zeitversetzten Sensorsignale (1a, 1b) sich in einem gemeinsamen Schnittpunkt (3) schneiden,
**dadurch gekennzeichnet,**
**dass** die Differenz der Signalwerte am Schnittpunkt (3) und an zumindest einem Scheitelpunkt (2a, 2b) ermittelt wird, dass der doppelte Sensorabstand in einem gedachten Raddurchmesserkreis (6) gleich der Länge der Kreissehne (se) und die Differenz der Signalwerte multipliziert mit einem vorgegebenen konstanten Umrechnungsfaktor (C) gleich der Sehnenhöhe (hs) und damit dem maximalen Abstand der Sehne im Raddurchmesserkreis gesetzt wird, wobei der halbe Raddurchmesser (R/2), die halbe Kreissehne (se/2) und die Differenz aus dem halben Raddurchmesser (R/2) und der Sehnenhöhe (hs) im Raddurchmesserkreis (6) die Seitenlängen eines rechtwinkligen Dreiecks bilden, und dass der Raddurchmesser (R) als Hypotenuse des Dreiecks anhand der beiden anderen Seitenlängen berechnet wird.

**2.**  Verfahren nach Anspruch 1,
**dadurch gekennzeichnet,**
**dass** zur Ermittelung der Differenz der Mittelwert der Signalwerte an den beiden Scheitelpunkten (2a, 2b) verwendet wird.

3. Verfahren nach Anspruch 1 oder 2,
**dadurch gekennzeichnet,**
**dass** der konstante Umrechnungsfaktor (C) anhand zumindest eines bekannten Raddurchmessers (R) ermittelt wird.